# EUROPÄISCHE PATENTSCHRIFT

(11) **EP 1 348 055 B1**
(45) Veröffentlichungstag und Bekanntmachung des Hinweises auf die Patenterteilung: **25.02.2009**
(21) Anmeldenummer: 01991741.8
(22) Anmeldetag: 20.11.2001
(51) Int. Cl.: D06F 37/20

(54) **ANTRIEBSVORRICHTUNG FÜR EIN HAUSHALTSGERÄT UND VERFAHREN ZUR MONTAGE EINES ELEKTROMOTORS**
DRIVE DEVICE FOR A DOMESTIC APPLIANCE AND A METHOD FOR MOUNTING AN ELECTROMOTOR
DISPOSITIF D'ENTRAINEMENT POUR UN APPAREIL ELECTROMENAGER ET PROCEDE POUR MONTER UN MOTEUR ELECTRIQUE

(30) Priorität: 14.12.2000 DE 10062364
(43) Veröffentlichungstag der Anmeldung: 01.10.2003
(73) Patentinhaber: BSH Bosch und Siemens Hausgeräte GmbH, 81739 München (DE)
(72) Erfinder: SKRIPPEK, Jörg, 14641 Priort (DE); HEYDER, Reinhard, 13403 Berlin (DE)
(86) Internationale Anmeldenummer: PCT/EP2001/013448
(87) Internationale Veröffentlichungsnummer: WO 2002/048444

(56) Entgegenhaltungen:
- EP-A- 0 947 622
- GB-A- 2 197 431
- US-A- 5 232 775

## Beschreibung

Die Erfindung betrifft eine Antriebsvorrichtung für ein Haushaltsgerät mit einem Elektromotor und Mitteln zur Befestigung des Elektromotors sowie ein Verfahren zur Montage eines Elektromotors in oder an einem Haushaltsgerät.

Aus der DE 199 37 229 A1 ist das Problem der sogenannten Ableitströme bekannt, die bei einer Antriebsvorrichtung für eine Waschmaschine mit einem Elektromotor auftreten. Ableitströme entstehen aufgrund kapazitiver Effekte bei einem Elektromotor mit Stromrichterantrieb oder einem elektronisch kommutierten Gleichstrommotor, d. h. einem frequenzumgerichteten Elektromotor, insbesondere bei hohen Umrichtfrequenzen, beispielsweise bei 16 bis 20 kHz. Solche hochfrequenten Ableitströme können hinsichtlich der elektromagnetischen Verträglichkeit problematisch sein. Zur Verhinderung der Ableitströme ist deshalb vorgeschlagen worden, den Tragkörper des Ständertragteils oder das Ständertragteil des Elektromotors als Ganzes aus elektrisch nicht leitfähigen Kunststoff herzustellen.

Nachteilig hierbei ist, dass derartige Kunststoff-Ständertragteile keine hohe Formstabilität haben. Ein weiterer Nachteil ist, dass auf Grund der vollständigen Isolation des Elektromotors auch beispielsweise elektrostatische Ladungen nicht abgeleitet werden können.

Der Erfindung liegt daher die Aufgabe zu Grunde, eine verbesserte Antriebsvorrichtung der eingangs genannten Art sowie ein verbessertes Haushaltsgerät zu schaffen.

Erfindungsgemäß wird diese Aufgabe durch die Merkmale der unabhängigen Patentansprüche gelöst.

Vorteilhafte Weiterbildungen ergeben sich aus den Unteransprüchen.

Die Erfindung erlaubt es, Ableitströme wirksam zu unterdrücken, um die elektromagnetische Verträglichkeit des Haushaltsgeräts zu gewährleisten. Da der Elektromotor jedoch nicht vollständig elektrisch isoliert ist, können dennoch elektrostatische Ladungen über den definierten Widerstand des mit einer Restleitfähigkeit versehenen Isolationsmaterials abgeleitet werden.

Bei dem Isolationsmaterial kann es sich um einen leitfähigen Kunststoff oder auch einen an sich nicht leitfähigen Kunststoff, dem leitfähiges Material beigemischt ist, handeln. Vorzugsweise wird dadurch ein definierter Widerstand zwischen dem Elektromotor und dessen Befestigung von vorzugsweise einem Megaohm realisiert. Ein solcher Widerstand führt zur wirksamen Unterdrückung der Ableitströme und erlaubt gleichzeitig eine effiziente Ableitung von elektrostatischer Ladung.

Vorteilhafterweise wird der definierte Widerstand zwischen dem Elektromotor und seiner Befestigung einerseits durch die Leitfähigkeit des Isolationsmaterials und andererseits durch einen definierten Anpressdruck des Isolationsmaterials zwischen dem Elektromotors und dessen Befestigung festgelegt. Der definierte Gesamtwiderstand ergibt sich dann aus der Summe der Widerstände des Isolationsmaterials und den Übergangswiderständen Elektromotor-Isolationsmaterial und Isolationsmaterial-Befestigung. Der Widerstand des Isolationsmaterials ist durch dessen Restleitfähigkeit bestimmt; der Widerstand der Übergangswiderstände durch den definierten Anpressdruck.

Vorteilhafterweise ist der definierte Anpressdruck zur Erzeugung eines definierten Übergangswiderstands durch eine Befestigungsschraube realisiert. Die Befestigungsschraube hält den Elektromotor beispielsweise an einem Einarm-Lagerkreuz oder unmittelbar an einem Gehäuse des Haushaltsgeräts, beispielsweise der Rückseite des Laugenbehälters im Falle einer Waschmaschine. Wird die Befestigungsschraube mit einem definierten Drehmoment festgezogen, so resultiert ein definierter Anpressdruck, der wiederum den Übergangswiderstand festlegt.

Die Erfindung erlaubt es ferner, die Befestigung des Elektromotors mittels nur einer Befestigungsschraube vorzunehmen, wobei zur zusätzlichen rotatorischen Fixierung des Elektromotors beispielsweise Arretierstifte vorgesehen sein können. Die Arretierstifte sind vorteilhafterweise aus nichtleitfähigem Material gebildet, also aus Material ohne Restleitfähigkeit. Dadurch ist gewährleitstet, dass der definiere Widerstand zwischen dem Elektromotor und der Befestigung zur Ableitung der elektrostatischen Aufladung allein durch das in dem Bereich der Befestigungsschraube verwendete Isolationsmaterial mit definiertem Restleitwert in Verbindung mit dem definierten Anpressdruck bestimmt wird.

Die Erfindung ist ferner vorteilhaft, da sie die Montage des Elektromotors mit nur einer Befestigungsschraube, die mit einem definierten Drehmoment festgezogen wird, erlaubt. Damit sind insbesondere für die Massenproduktion beträchtliche Kostenvorteile verbunden. Ferner hat dies auch Vorteile für die Qualitätssicherung.

Die Erfindung eignet sich sowohl für einen direkten Antrieb - beispielsweise einen direkt die Wäschetrommel antreibenden Elektromotor - als auch für einen indirekten Antrieb - beispielsweise einen Elektromotor, der die Welle einer Wäschetrommel über ein Getriebe oder einen Keilriemen antreibt, wie beispielsweise aus der DE 199 11 139 A1 bekannt.

Nachstehend wird die Erfindung in Ausführungsbeispielen anhand der Zeichnungen näher erläutert. Es zeigen:
- Fig. 1: einen seitlichen Schnitt einer erfindungsgemäßen Antriebsvorrichtung;
- Fig. 2: eine vergrößerte Teilansicht der Antriebsvorrichtung mit einem Teilschnitt;
- Fig. 3 bis 5: bevorzugte Ausführungsformen für die Realisierung eines definierten Widerstands in einer dem Teilschnitt der Fig. 2 entsprechenden Ansicht.

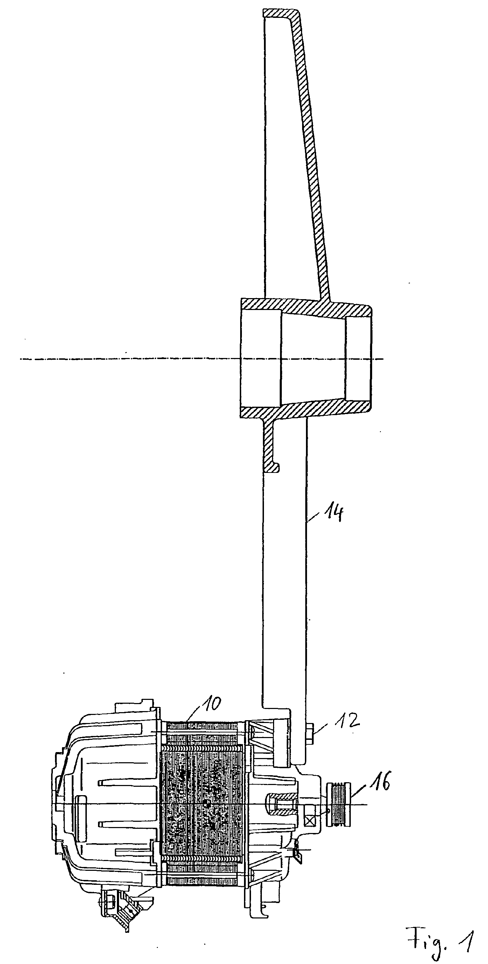

Die Fig. 1 zeigt einen Elektromotor 10, der mittels einer Befestigungsschraube 12 mit einem Einarm-Lagerkreuz 14 verbunden ist. Der Elektromotor 10 hat eine Keilriemenscheibe 16 zur Aufnahme eines nichtdargestellten Keilriemens, etwa zum Antrieb der Wäschetrommel einer Waschmaschine, eines Wäschetrockners oder einer Küchenmaschine. Bei der in der Fig. 1 gezeigten Antriebsvorrichtung handelt sich um einen sogenannten indirekten Antrieb, da sich zwischen dem Elektromotor 10 und dem anzutreibenden Element ein Getriebe - in dem gezeigten Beispiel ein Keilriemengetriebe - befindet. Hierauf ist die Erfindung jedoch nicht beschränkt; sie lässt sich auch bei anderen Antriebsanordnungen, insbesondere bei direkten Antrieben ohne Zwischenschaltung eines Getriebes realisieren. Bei einem direkten Antrieb etwa würde die Befestigungsschraube 12 den Elektromotor 10 unmittelbar an einem Gehäuse des Haushaltsgerätes fixieren oder beispielsweise an dem Laugenbehälter.

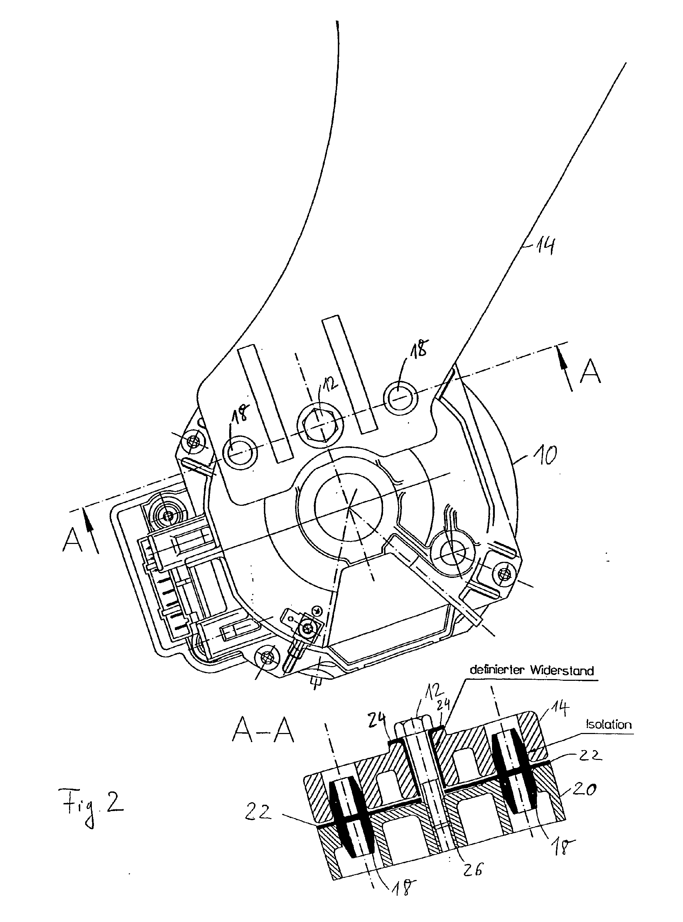

Im weiteren werden gleiche oder einander entsprechende Elemente der Figuren mit gleichen Bezugszeichen bezeichnet. Die Fig. 2 zeigt eine Detailansicht der Antriebsvorrichtung der Fig. 1. Entlang der Schnittlinie A-A der Fig. 2 befinden sich Arretierstifte 18 neben der Befestigungsschraube 12, die in entsprechende Ausnehmungen sowohl des Einarm-Lagerkreuzes 14 als auch in dem Lagerschild 20 des Elektromotors 10 eingreifen. Die Arretierstifte 18 bestehen aus einem elektrisch nicht leitfähigem Kunststoff.

In einem Bereich zwischen dem Einarm-Lagerkreuz 14 und dem Lagerschild 20 befindet sich Isolationsschichten 22, die ebenfalls aus einem elektrisch nicht leitfähigem Kunststoff bestehen. Die Isolationsschichten 22 können als bauliche Einheit mit dem oder den Arretierstiften 18 ausgebildet sein, was bei der Montage des Elektromotors 10 vorteilhaft ist.

Das Einarm-Lagerkreuz 14 weist eine Bohrung zur Aufnahme des Schafts der Befestigungsschraube 12 auf. Die Innenseite der Bohrung ist mit einer Isolationsschicht 24 beschichtet, die aus einem Material mit einer definierten Leitfähigkeit besteht. Die Isolationsschicht 24 erstreckt sich außerhalb der Bohrung in dem Einarm-Lagerkreuz 14 bis unter die Auflagefläche des Schraubenkopfes der Befestigungsschraube 12, so dass die festgezogene Befestigungsschraube 12 von dem Einarm-Lagerkreuz 14 durch die Isolationsschicht 24 isoliert ist. Andererseits greift die Befestigungsschraube 12 in ein Innengewinde 26 in dem Lagerschild 20 des Elektromotors 10 ein, so dass eine elektrisch gut leitende Verbindung zwischen der Befestigungsschraube 12 und dem Elektromotor 10 hergestellt ist.

Die Befestigungsschraube 12 ist mit einem definierten Drehmoment festgezogen, so dass sich ein definierter Anpressdruck im Bereich der Auflage des Schraubenkopfes der Befestigungsschraube 12 auf der Isolationsschicht 24 ergibt. Der definierte Anpressdruck ergibt einen definierten Übergangswiderstand für die Übergänge Einarm-Lagerkreuz 14 und Isolationsschicht 24 einerseits und Isolationsschicht 24 - Befestigungsschraube 12 andererseits. Die so definierten Übergangswiderstände ergeben zusammen mit dem definierten Leitwert des Materials der Isolationsschicht 24 einen definierten resultierenden Widerstand für die elektrische Verbindung zwischen dem Lagerschild 20 des Elektromotors 10 und dem Einarm-Lagerkreuz 14.

Der definierte Widerstand wird dabei vorteilhafterweise im Bereich zwischen 0,5 und 2 Megaohm, vorzugsweise 1 Megaohm, gewählt. Dies gewährleistet einerseits eine wirksame Unterdrückung der unerwünschten hochfrequenten Ableitströme und ermöglicht andererseits die gewünschte Ableitung elektrostatischer Ladung von dem Elektromotor 10 über das Einarm-Lagerkreuz 14.

Die Befestigung des Elektromotors 10 mittels der einen Befestigungsschraube 12 hat ferner den Vorteil, dass bei der Montage des Elektromotors 10 nur diese eine Schraube 12 mit einem definierten Drehmoment festgezogen werden muss, um sowohl die mechanische Fixierung des Elektromotors 10 als auch die Herstellung eines definierten Widerstands zur Ableitung elektrostatischer Ladungen von dem Elektromotor zu realisieren. Da es sich bei dem Festziehen der Befestigungsschraube 12 um nur einen Bearbeitschritt handelt, hat dies sowohl Vorteile hinsichtlich der Herstellungskosten als auch hinsichtlich der Qualitätskontrolle.

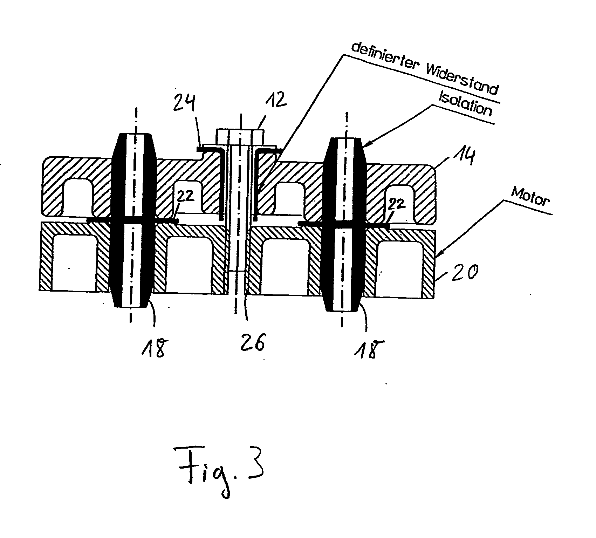

Die Fig. 3 zeigt eine alternative Ausführungsform der Erfindung, bei der im Vergleich der Ausführungsform der Fig. 2 die Arretierstifte 18 jeweils Vorsprünge zur Realisierung der Isolationsschicht 22 aufweisen. Die Vorsprünge dienen auch als Montagehilfe, da sie nämlich die Einstecktiefe der Arretierstifte 18 in die entsprechenden Bohrungen in dem Lagerschild 20 festlegen. Das Material der Arretierstifte 18 und der Isolationsschicht 22 ist wiederrum elektrisch nicht leitend, so dass der definierte Gesamtwiderstand - wie bei dem Ausführungsbeispiel der Fig.2 - durch die Isolationsschicht 24 zusammen mit dem definierten Anpressdruck der Befestigungsschraube 12 bestimmt ist.

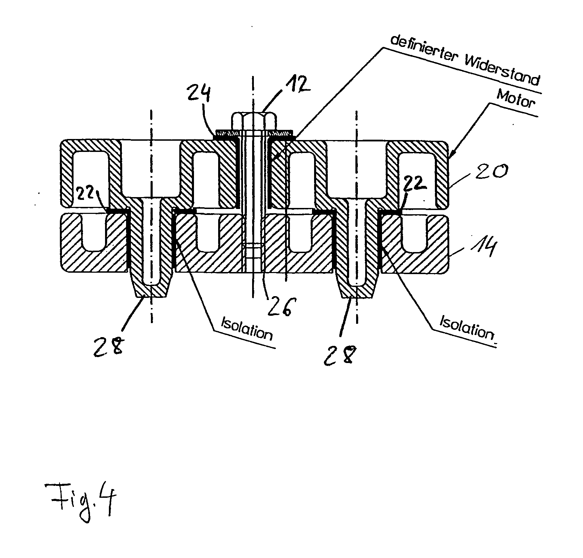

Die Fig. 4 zeigt ein weiteres alternatives Ausführungsbeispiel, bei dem die Isolationsschicht 24 in dem Lagerschild 20 des Elektromotors 10 und das Gewinde 26 in dem Einarm-Lagerkreuz 14 realisiert ist. Das Lagerschild 20 weist Vorsprünge 28 auf, die in entsprechende Ausnehmungen in dem Einarm-Lagerkreuz 14 eingreifen. Zwischen den Vorsprüngen 28 und deren Anlagefläche mit den entsprechenden Aufnehmungen befindet sich die Isolationsschicht 22 aus elektrisch nicht leitendem Material, so dass der definierte Gesamtwiderstand wiederum durch die Isolationsschicht 24 in Zusammenhang mit dem definierten Anpressdruck durch die Befestigungsschraube 12 festgelegt ist.

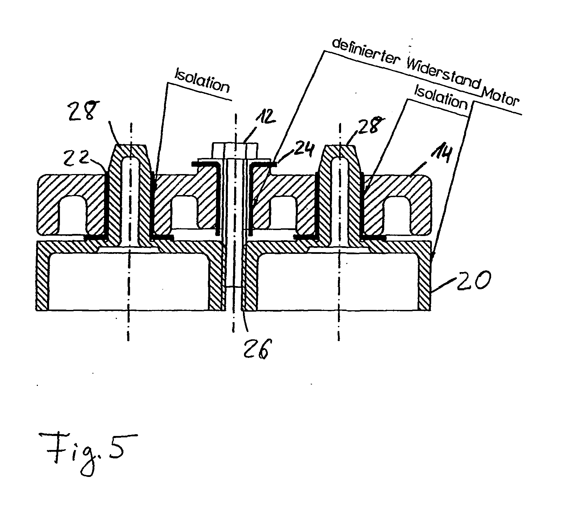

Die Fig. 5 zeigt ein weiteres bevorzugtes Ausführungsbeispiel der Erfindung, bei dem im Vergleich zu dem Ausführungsbeispiel der Fig. 4 wiederum die Isolationsschicht 24 in dem Einarm-Lagerkreuz 14 und das Gewinde 26 in den Lagerschild 20 des Elektromotors 10 ausgebildet sind. Die Vorsprünge 28 befinden sich an dem Lagerschild 20 des Elektromotors 10 und greifen in entsprechende Ausnehmungen in dem Einarm-Lagerkreuz 14 ein, von denen sie durch eine Isolationsschicht 22 aus nicht leitfähigem Material isoliert sind.

### Bezugszeichenliste

- Elektromotor: 10
- Befestigungsschraube: 12
- Einarm-Lagerkreuz: 14
- Keilriehmenscheibe: 16
- Arretierstift: 18
- Isolationsschicht: 22, 24
- Gewinde: 26
- Vorsprünge: 28

## Patentansprüche

1. Antriebsvorrichtung für ein Haushaltsgerät mit einem Elektromotor (10) und Mitteln (12, 14) zur Befestigung des Elektromotors (10), wobei zwischen den Mitteln (12, 14) zur Befestigung und dem Elektromotor (10) Isolationsmaterial (24) mit einer Restleitfähigkeit zur elektrischen Isolierung des Elektromotors (10) von den Mitteln (12, 14) zur Befestigung vorgesehen sind, **dadurch gekennzeichnet, dass** das Isolationsmaterial (24) einen definierten Widerstand zur Ableitung elektrostatischer Ladungen von dem Elektromotor (10) aufweist, der zwischen 0,5 Megaohm und 2 Megaohm, vorzugsweise 1 Megaohm beträgt.

2. Antriebsvorrichtung nach Anspruch 1, **dadurch gekennzeichnet, dass** es sich bei dem Isolationsmaterial (24) um leitfähigen Kunststoff oder um Kunststoff mit einer Beimischung leitfähigen Materials, insbesondere Kohlenstoff und/oder Metallpulver, handelt.

3. Antriebsvorrichtung nach Anspruch 1 oder 2, **dadurch gekennzeichnet, dass** Mittel (12) zur Erzeugung eines definierten Anpressdrucks des Isolationsmaterials mit Restleitfähigkeit (24) zwischen dem Elektromotor (10) und den Mitteln (14) zur Befestigung vorgesehen sind, und dass der definierte Widerstand zur Ableitung elektrostatischer Ladungen durch die Restleitfähigkeit des Isolationsmaterials (24) und durch den Anpressdruck festgelegt ist.

4. Antriebsvorrichtung nach Anspruch 3, **dadurch gekennzeichnet, dass** es sich bei den Mitteln zur Erzeugung des definierten Anpressdrucks um eine Schraube (12) handelt, die mit einem definierten Drehmoment angezogen ist.

5. Antriebsvorrichtung nach einem der Ansprüche 1 bis 4, **dadurch gekennzeichnet, dass** die Mittel (14) zur Befestigung eine erste Ausnehmung zur Aufnahme des Schraubenschafts einer Schraube (12) aufweisen, und eine Isolationsschicht des Isolationsmaterials mit Restleitfähigkeit (24) unter der Auflagefläche des Schraubenkopfes der Schraube (12) angeordnet ist.

6. Antriebsvorrichtung nach Anspruch 1 bis 5, **dadurch gekennzeichnet, dass** die Mittel (14) zur Befestigung zumindest eine zweite Ausnehmung zur Aufnahme eines Arretierstifts (18) aufweisen und der Arretierstift (18) aus elektrisch nicht leitfähigem Material besteht oder mit einem nicht leitfähigen Material beschichtet ist.

7. Antriebsvorrichtung nach einem der Ansprüche 1 bis 6, **dadurch gekennzeichnet, dass** die Mittel (14) zur Befestigung zumindest einen Vorsprung (28) zur Aufnahme in einer entsprechenden Ausnehmung aufweisen und dass zwischen dem zumindest einem Vorsprung (28) und der entsprechenden Ausnehmung eine Isolationsschicht (22) aus elektrisch nicht leitfähigem Material angeordnet ist.

8. Antriebsvorrichtung nach einem der Ansprüche 1 bis 7, **dadurch gekennzeichnet, dass** es sich um einen direkten Antrieb handelt.

9. Antriebsvorrichtung nach einem der Ansprüche 1 bis 7, **dadurch gekennzeichnet, dass** es sich um einen indirekten Antrieb handelt, und die Mittel zur Befestigung vorzugsweise ein Einarmbefestigung (14) für den Elektromotor (10) aufweisen.

10. Haushaltsgerät, vorzugsweise Waschmaschine, Wäschetrockner oder Küchenmaschine, mit einer Antriebsvorrichtung nach einem der Ansprüche 1 bis 9.

## Claims

1. Drive device for a domestic appliance with an electric motor (10) and means (12, 14) for fastening the electric motor (10), wherein insulation material (24) with a residual conductivity for electrical insulation of the electric motor (10) from the means (12, 14) for the fastening are provided between the means (12, 14) for the fastening and the electric motor (10), **characterised in that** the insulation material (24) has a defined resistance for discharge of electrostatic charges from the electric motor (10), the resistance being between 0.5 megaOhms and 2 megaOhms, preferably 1 megaOhm.

2. Drive device according to claim 1, **characterised in that** the insulation material (24) is a conductive plastics material or a plastics material with an admixture of conductive material, particularly carbon and/or metal powder.

3. Drive device according to claim 1 or 2, **characterised in that** means (12) for producing a defined pressing pressure of the insulation material with residual conductivity (24) are provided between the electric motor (10) and the means (14) for the fastening and that the defined resistance for discharge of electrostatic charges is fixed by the residual conductivity of the insulation material (24) and by the pressing pressure.

4. Drive device according to claim 3, **characterised in that** the means for producing the defined pressure is a screw (12) which is tightened with a defined torque.

5. Drive device according to any one of claims 1 to 4, **characterised in that** the means (14) for the fastening comprise a first recess for reception of the screw shank of a screw (12), and an insulation layer of the insulation material with residual conductivity (24) is arranged under the contact surface of the screw head of the screw (12).

6. Drive device according to claim 1 to 5, **characterised in that** the means (14) for the fastening comprise at least one second recess for reception of a locking pin (18) and the locking pin (18) consists of electrically non-conductive material or is coated with a non-conductive material.

7. Drive device according to any one of claims 1 to 6, **characterised in that** the means (14) for the fastening comprise at least one projection (28) for reception in a corresponding recess and that an insulation layer (22) of electrically non-conductive material is arranged between the at least one projection (28) and the corresponding recess.

8. Drive device according to any one of claims 1 to 7, **characterised in that** it is a direct drive.

9. Drive device according to any one of claim 1 to 7, **characterised in that** it is an indirect drive and the means for the fastening preferably comprise a single-arm fastening (14) for the electric motor (10).

10. Domestic appliance, preferably washing machine, laundry dryer or food processor, with a drive device according to any one of claims 1 to 9.

## Revendications

1. Dispositif d'entraînement pour un appareil électroménager comprenant un moteur électrique (10) et des moyens (12, 14) pour la fixation du moteur électrique (10), du matériau d'isolation (24) avec une conductibilité résiduelle étant prévue entre les moyens (12, 14) pour la fixation et le moteur électrique (10) pour l'isolation électrique du moteur électrique (10) par rapport aux moyens (12, 14) pour la fixation, **caractérisé en ce que** le matériau d'isolation (24) présente une résistance définie pour la déviation de charges électrostatiques du moteur électrique (10), qui se situe entre 0,5 Mégaohm et 2 Mégaohms, de préférence 1 Méga ohm.

2. Dispositif d'entraînement selon la revendication 1, **caractérisé en ce que**, en ce qui concerne le matériau d'isolation (24), il s'agit de plastique conductible ou de plastique avec un ajout de matériau conductible, en particulier du carbone et/ou de la poudre de métal.

3. Dispositif d'entraînement selon la revendication 1 ou 2, **caractérisé en ce que** des moyens (12) pour générer une pression d'appui définie du matériau d'isolation à conductibilité résiduelle (24) sont prévus entre le moteur électrique (10) et les moyens (14) pour la fixation, et **en ce que** la résistance définie pour la déviation de charges électrostatiques est fixée par la conductibilité résiduelle du matériau d'isolation (24) et par la pression d'appui.

4. Dispositif d'entraînement selon la revendication 3, **caractérisé en ce que**, en ce qui concerne les moyens pour générer la pression d'appui définie, il s'agit d'une vis (12) qui est serrée avec un couple défini.

5. Dispositif d'entraînement selon l'une quelconque des revendications 1 à 4, **caractérisé en ce que** les moyens (14) pour la fixation présentent un premier évidement pour le logement de la tige de vis d'une vis (12), et une couche d'isolation du matériau d'isolation à conductibilité résiduelle (24) est disposée au-dessous de la surface d'appui de la tête de la vis (12).

6. Dispositif d'entraînement selon les revendications 1 à 5, **caractérisé en ce que** les moyens (14) pour la fixation présentent au moins un second évidement pour le logement d'une broche d'arrêt (18) et la broche d'arrêt (18) est à base de matériau électriquement non conducteur ou est recouverte de matériau non conducteur.

7. Dispositif d'entraînement selon l'une quelconque des revendications 1 à 6, **caractérisé en ce que** les moyens (14) pour la fixation présentent au moins une saillie (28) pour le logement dans un évidement correspondant et **en ce qu'**une couche d'isolation (22) à base de matériau électriquement non conducteur est disposée entre l'au moins une saillie (28) et l'évidement correspondant.

8. Dispositif d'entraînement selon l'une quelconque des revendications 1 à 7, **caractérisé en ce qu'**il s'agit d'un entraînement direct.

9. Dispositif d'entraînement selon l'une quelconque des revendications 1 à 7, **caractérisé en ce qu'**il s'agit d'un entraînement indirect, et les moyens (14) pour la fixation présentent de préférence une fixation à un bras (14) pour le moteur électrique (10).

10. Appareil électroménager, de préférence lave-linge, sèche-linge ou robot ménager, avec un dispositif d'entraînement selon l'une quelconque des revendications 1 à 9.
